# EUROPEAN PATENT SPECIFICATION

(11) **EP 4 178 885 B1**
(45) Date of publication and mention of the grant of the patent: **18.11.2026**
(21) Application number: 21746573.1
(22) Date of filing: 09.07.2021
(51) Int. Cl.: B65G 1/10, A47B 31/04, A47B 43/00, B65B 3/02

(54) **STORAGE RACK WITH A VERTICALLY MOVABLE COMPARTMENT SYSTEM**
LAGERREGAL MIT VERTIKAL BEWEGBAREM FACHSYSTEM
RAYONNAGE DE STOCKAGE AVEC SYSTÈME DE COMPARTIMENT VERTICALEMENT MOBILE

(30) Priority: 09.07.2020 BE 202005513
(43) Date of publication of application: 17.05.2023
(73) Proprietor: Conteyor International NV, 9820 Merelbeke (BE)
(72) Inventor: STEINBERG, Dick, 9820 Merelbeke (BE)
(74) Representative: Brantsandpatents bv
(86) International application number: PCT/IB2021/056181
(87) International publication number: WO 2022/009167

(56) References cited:
- CZ-U1- 34 337
- ES-U- 1 181 609
- ES-U- 1 212 539
- FR-A1- 2 795 709
- FR-A1- 2 845 354
- JP-U- S59 118 435
- PL-B1- 242 273
- SK-B6- 289 200
- SK-U1- 501 232 020
- SK-Y1- 9 253
- US-A1- 2001 025 765

## Description

### TECHNICAL FIELD

The invention is related to storage devices for storage and/or transport of goods. In particular, the invention focuses on storage racks with a vertically movable compartment system.

### PRIOR ART

Storage racks with flexible and movable compartments are known as such in the prior art.

For example, FR 2 845 354 (Européenne de Conception de Conteneurs pour l'Automobile) describes a mobile storage rack with a support structure and with a flexible compartment structure. The compartment structure provides compartments accessible from a front of the storage rack. Furthermore, the compartment structure is centrally suspended within the support structure, under a central belt. Further belts extend obliquely upwards, from the four upper corners of the compartment structure, down to the central belt. The compartment structure can therefore be raised and lowered centrally. It is true that such a suspension requires a rectangular suspension frame which reinforces the upper side of the flexible compartment structure, which has the disadvantage of making the movement heavier. Another disadvantage of the central suspension is that the compartment structure may tilt (e.g. in the case of a non-symmetrical load) within the support structure. This inclination can further complicate or even completely block the vertical movement of the compartment structure.

Furthermore, masses are provided along the belt. They compensate for the empty weight of the compartment structure. The masses and the belt are movable in a vertical slot profile of the support structure, which extends along the front side. A disadvantage here is that the support profile makes access to some storage compartments more difficult. Also, the support profile (and therefore also the masses contained in it) is quite limited in size. This limits the weight that can be compensated.

Furthermore, operating means are provided on the belt, also accessible from the front. In addition, they can be secured over the support profile, behind corresponding stops. This allows to lock the compartments in defined vertical positions. An obvious disadvantage is that the stops only provide locking in one direction.

Furthermore, US 10 081 490 (Diverse Global) describes a telescopic storage rack with a base frame and an extension frame. A flexible compartment system is suspended directly from the extension frame, within the base frame. The extension frame is movable upward and downward relative to the base frame. This is accompanied by a corresponding upward and downward movement of the compartment system. A disadvantage is that the extension frame makes the movement considerably more difficult/heavier.

A further example is ES 1 212 539 U which discloses a storage container with a vertically movable flexible shelving system, divided into upper and lower levels of compartments. The lifting mechanism includes belts and crossbars, and the compartments may collapse under weight, allowing a transformation between raised and lowered positions. However, the stability of the container needs further improvement. In particular, the document discloses storage device comprising a frame and a compartment system suspended within the frame, which compartment system comprises at least a lower level of storage compartments and an upper level of storage compartments, accessible from a front of the device, and suitable for the storage of general cargo, the device being further adapted for vertical movability of the compartment system between a lowered position and a raised position, within the frame,
- in which lowered position the lower level has collapsed, with the upper level erected and accessible above it, and
- in which raised position the lower level is erected and accessible, with the overlying level above it raised,
wherein the compartment system is rectangularly suspended from four lifting belts extending vertically upwards, wherein the compartment system at the front provides a cross bar, movable vertically in the frame, from which cross bar the lower and the upper level are suspended, wherein each level provides a grid of storage compartments which are provided next to and above each other, wherein at least the lower level of storage compartments is made of a flexible material.

Finally, CZ 29 088 and SK 7781 (Keypack) describe another frame within which a flexible compartment system is suspended. The compartment system is suspended from belts. Said belts are wound around a central shaft at the top. The rotation of the central axis determines the upward and downward movement of the compartments. This rotation can be controlled from a laterally placed crank at the bottom. As a disadvantage, the central axis limits the usable height of the storage rack. As a further disadvantage, the side crank limits the usable width of the storage rack. Certainly in a logistics context, it is important that the storage rack uses the available space as efficiently as possible. Furthermore, the mechanism of operation via a side crank is quite complex.

A number of important characteristics of storage devices and storage racks are smooth movement, efficient use of space, good handling, easy accessibility, high durability, low weight, and low production cost and material costs.

The present invention contemplates a new and improved storage device. Among other things, an attempt is made to provide a solution for one or more of the above-mentioned problems.

### SUMMARY OF THE INVENTION

To this end, in a first aspect, the invention provides a storage device according to claim 1. The device provides a compartment system that is vertically movable within a frame, with compartments for storing general cargo. The compartment system is rectangularly suspended from four lifting belts extending vertically upwards.

Different from the suspension in FR 2 845 354, the invention provides a rectangular suspension from four vertical lifting belts, preferably at the level of the four corners. This makes the compartment system less likely to skew or get blocked within the frame. The compartment system preferably moves along rails via wheels or sliders, which further facilitates the movement.

The storage device provides a countermass that moves reciprocally with the compartment system. This can support the manual movement of the compartment system, both in loaded and unloaded conditions. The countermass is plate-shaped, moving parallel to the plate shape along the device. This compact design allows to maximise the usable dimensions of the storage device. With preference, said compartments are accessible from the front, and the countermass moves along a side different from the front (claim 2). The countermass therefore does not hinder access to the compartments. The compartment system can be operated from the front, via cross bars, and is preferably position-locked, via a plunger lock or other transverse lock (claim 9). Optionally, the device provides stops to limit the vertical movement of the compartment system between a lower position and an upper position (claim 10). Furthermore, the transverse lock is optionally adapted to lock the position of the compartment system in both limit positions (claim 11).

In a further aspect, the invention provides for the use of the storage device according to the first aspect of the invention (claim 12).

Clearly, the invention provides a good weight distribution via four belts, a smooth movement via guide means along guideways, a compact arrangement of the countermass, and a high-performance position locking via the plunger lock or other locking means.

### DESCRIPTION OF THE DRAWINGS

Figures 1A**-B** are perspective views of a storage rack, according to a possible embodiment of the invention.
Figures 2A**-C** schematically illustrate the raising and lowering of a compartment system, according to a possible embodiment.
Figures 3A**-C** illustrate another transverse lock for locking the movement of the compartment system, according to a possible embodiment.

### DETAILED DESCRIPTION

The invention relates to a storage device suitable for the storage of general cargo, as well as the use of the storage device.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, 'a' and 'the' refer to both the singular and the plural, unless the context presupposes otherwise. For example, 'a segment' means one or more segments.

When the term 'around' or 'about' is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term 'about' or 'around' is used, is itself specifically disclosed.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

Preferably, a belt can be guided at least around a guide such as a rolling element or sliding element. It is also preferably possible to roll up belts on bobbins.

Quoting numerical intervals by endpoints comprises all integers, fractions and/or real numbers between the endpoints, these endpoints included.

In a first aspect, the invention relates to a storage device comprising a frame and a compartment system suspended within the frame, the compartment system providing at least a lower level of storage compartments and an overlying level of storage compartments, accessible from a front of the device, and suitable for storing general cargo, the device being further adapted for vertical movability of the compartment system between a lowered position and a raised position, within the frame,
- in which lowered position the lower level has collapsed, with the overlying level above it erected and accessible, and
- in which raised position the lower level is erected and accessible, with the overlying level above it raised.

The compartment system is rectangularly suspended from four lifting belts extending vertically upwards. Preferably, the storage device is a storage rack.

It is preferably a fixed, rigid frame (instead of a base frame plus a telescopic extension frame). A fixed and integral frame makes it possible to make a suitable compromise between maximum strength and load-bearing capacity on the one hand, and minimum weight on the other. This is especially important in transport applications. Optionally, the frame is mobile. Optionally, the frame is fitted with one or more wheels at the bottom. In a non-limitative version, the frame provides two wheels and two support feet at the bottom. Alternatively, the frame provides four wheels at the bottom. The frame preferably encloses a substantially beam-shaped volume, within which the compartment system is provided. With further preference, the frame mainly provides support structures along the ribs of the beam shape. This maximises front/back/left and/or right side accessibility. Optionally, the frame includes four corner posts that rectangularly enclose the compartment system.

The compartment system provides a plurality of storage compartments. There are two or more levels of storage compartments. There are two levels:
a lower and an upper level. Hereinafter, the terms 'overlying' and 'upper' are interchangeably used, without this limiting the invention to two levels or more than two levels. Both the lower and the overlying level provide at least one storage compartment.

They each provide a multitude of compartments. They each provide a grid of storage compartments that are provided next to and above each other. Each level can provide two or more superimposed series of side-by-side compartments. It is preferably a rectangular grid. The compartments are at least accessible from the front, when erected.

The compartment system is vertically movable between a raised position and a lowered position, within the frame. In the lowered position, the lower level of storage compartments is collapsed or folded up. Preferably, it hereby takes on a more compact form. The compartment material of at least the lower level of storage compartments is flexible. Preferably, it automatically assumes the compact form. At least the lower storage compartments are flexible. With further preference, both the lower and the upper storage compartments are flexible.

'Vertical movability' of the compartment system, as referred to herein, indicates that at least a part (e.g., the overlying/upper level of storage compartments) is vertically movable within the frame. The invention now further provides a rectangular suspension of the compartment system from four lifting belts extending vertically upwards. Preferably, the lifting belts extend vertically upwards from four corner parts at the top of the compartment system. An advantage is that the compartment system will skew less quickly as a result. The compartment system per se is three-dimensional, thus preferably the four straps are used to hold the compartment system up rectangularly below its top surface, from the four corners.

It is therefore not necessary to reinforce the top of the compartment system in a rectangular manner. In FR 2 845 354, however, this is necessary so that the top side can withstand inward forces caused by the obliquely upwardly extending lifting belts.

The device further comprises a countermass, adapted to move reciprocally with the compartment system, between a raised position and a lowered position. The countermass makes it possible to at least partially compensate for the weight of the compartment system and/or the general cargo loaded in it. Preferably, the countermass comprises a substantial mass (e.g. at least 10 times the total weight of lifting belts). Preferably, the countermass comprises an inexpensive material of relatively high mass density. Optionally, the countermass comprises steel. Optionally, the countermass comprises sheet steel material. Preferably, the countermass compensates for at least the empty weight of the upper level of storage compartments.

In a further or alternative embodiment, the countermass is adapted to move along a side of the storage device, different from the front. The countermass thus does not hinder access to the storage compartments from the front. Optionally, the countermass is provided along the left side, the right side or the rear of the device.

The countermass is substantially plate-shaped, adapted to move along and parallel to the storage device. With preference, the countermass moves between two adjacent corner posts of the frame. This compact design allows to use the available space as efficiently as possible. Optionally, the countermass is substantially rectangular and plate-shaped.

In a further or alternative embodiment, the lifting belts bend laterally at the top of the frame and are coupled vertically downwards to the countermass. Optionally, they bend at the height of four upper corners of the frame. Optionally, four belt guides are provided at the top of the frame (e.g. rolling elements or sliding elements), adapted to bend the vertically upward lifting belts laterally and/or downwards. Belt guides make it possible to very compactly bend the tension force in the pulling belts (under the weight of the compartment system) and to direct it vertically downwards towards the reciprocally moving countermass (provided along one side of the storage device). Preferably, the pulling belts provide a direct mechanical connection between the compartment system and the countermass.

In a further or alternative embodiment, the lifting belts are combined in pairs at the top of the frame, each pair of combined lifting belts being coupled downwards to the countermass. Optionally, two first belt guides are positioned at the top, on a side opposite the countermass. These first belt guides provide for the lateral bending (total 90°) of two corresponding, first pulling belts. Two second belt guides, positioned on the side of the countermass, provide for both the sideways and downward bending (total 180°) of two corresponding, second pulling belts, as well as the combination of the first and second pulling belts. This, vertically above the countermass.

In an alternative embodiment, not according to the claimed invention, the lifting belts are steel cables, and the belt guides are rolling elements on bearings. This embodiment is advantageous for reducing friction when manipulating the compartment system.

The compartment system in itself is three-dimensional. To keep it rectangularly stable under its upper surface, four belts or lines are used at the upper corners. The countermass is two-dimensional. Thus, the four belts or lines are combined into two belts or lines. Each pair engages the countermass combined. Preferably, the countermass comprises an upper edge part, to which upper edge part said pairs of lifting belts are coupled, each near a respective upper corner of the countermass. This is sufficient to keep the (one-dimensional) top edge stable.

In a further or alternative embodiment, the countermass is provided with guide means, adapted to guide the countermass rectangularly between two guideways provided on the frame. The countermass cannot therefore skew or block. It is limited to a vertical upward and downward movement. This is especially advantageous when tension forces in the belts are not evenly distributed. For example, when manually moving the storage compartments from a cross bar at the front (see below). Or, for example, when loading is not symmetrically (forward-backward). The countermass then acts as a part that forces the compartment system into a straight position.

A plate shape of the countermass has the particular advantage that it comprises a certain height. Lateral guiding means (e.g. wheels, sliders, a sliding side edge) can be provided at least at the top and bottom. Preferably, such guide means are coupled to lateral guide means (e.g. a rail, groove, rib). They then provide a rectangular containment and guidance of the countermass, so that it is limited to a vertical upward and downward movement. The countermass cannot skew or block.

In a further embodiment, the countermass comprises at least four wheels, preferably at least six wheels. The countermass comprises at least two wheels on each side which are oriented in transverse directions. A first wheel is oriented parallel to the frame and a second wheel is oriented transversely to the frame. The first wheel is preferably provided at the bottom. The second wheel is preferably provided at the top. Preferably, the countermass comprises a third wheel at the top, which is oriented parallel to the frame. This embodiment is advantageous to reduce friction between the countermass and the frame and/or lateral guide means to which the wheels are coupled. This is also advantageous to avoid blocking of the countermass during vertical movement. The first and optionally third wheels avoid friction and locking in a direction parallel to the frame, for instance through one-sided manipulation of the compartment system, and the second wheels in a direction transverse to the frame, for instance by forces exerted by the lifting belts.

The compartment system provides at the front a lower cross bar and an overlying cross bar, which can be moved vertically in the frame, from which cross bars the lower and the overlying level are suspended, respectively. Preferably, the cross bars are relatively rigid with respect to the frame. They allow easy handling of the compartment system. Preferably, such horizontal cross bars are provided at the front as well as at the rear. Preferably they extend through loops and/or eyes formed by the compartment material of the storage compartments. Preferably, the compartment system comprises compartments arranged side by side with standing wall parts between them. These wall parts extend from the front to the rear. They form eyes at the level of the cross bars, optionally provided with reinforcement rings. Such (flexible) wall parts provide to an important extent the stable suspension of a level of storage compartments, under at least a cross bar at the front and a cross bar at the back.

In a further or alternative embodiment, the left-hand end parts and right-hand end parts of the said cross bars are respectively coupled to a left and a right guide assembly, which guide assemblies are movable vertically along the frame. Optionally, four such guide assemblies are movable along four corner posts of the frame. Optionally, at least one corner post comprises a profiling forming a rail for enclosing corresponding guides (e.g. rolling elements or sliding elements) provided on the compartment structure.

The upper level of compartments is suspended from upper cross bars. The lower level of compartments is suspended from lower cross bars. With further preference, the lower and upper bars are coupled at either end to guide assemblies movable along the corner posts of the frame. Preferably, the four pulling belts are coupled to the four guide assemblies. Thus, the pulling belts are rigidly coupled to both the lower and upper levels, independently of each other. A heavily loaded lower level does not have the effect of bending the compartment material of the upper level.

In a further embodiment, guide assemblies formed on one side by the left end parts of said cross bars are connected to each other by means of two cross beams and guide assemblies formed on one side by the right end parts of said cross bars are connected to each other by means of two cross beams. The two cross beams are preferably crossed cross beams. This embodiment is advantageous because it provides a rigid guide assembly on the side formed by the left-hand end parts of the said cross bars and on the side formed by the right-hand end parts of the said cross bars, so that the compartment system does not or hardly deform during movement.

In a further or alternative embodiment, at least one guide assembly is provided with a transverse lock, for selectively locking the vertical movement of the guide assembly. The guide assembly is preferably already limited to a vertical upward or downward movement. Locking such a rigid guide assembly in a vertical position allows a high-performance locking. Furthermore, at least the counterweight (as described above) will maintain the compartment material in a straight position. A transverse lock, for example a plunger lock based on a transversely movable pin in a locking hole, allows locking in two directions. Preferably, at least one of the two guide assemblies at the front is equipped with such a lock. This allows blocking of the compartment system from the front.

In a further embodiment the transverse lock is a lever, wherein the lever is movable between a first position and a second position. The lever is at rest in both the first and second positions. This means that the lever remains in the first position or second position without manipulation. In the first position, the movable pin is received in the locking hole. In the second position, the movable pin is removed from the locking hole. In the second position, the movable pin of the frame or a rail included in a corner post of the frame, along which the guide assembly is vertically movable, is removed. This embodiment is advantageous because the movable pin cannot rub against the frame or the rail during the vertical movement of the guide assembly, so that manipulation of the compartment system is simple.

In a further or alternative embodiment, the frame provides a lower stop and an upper stop that limit the movement of at least one guide assembly, between a lower and an upper position. Preferably, the lower position corresponds to the lowered position of the compartment system, and the upper position to the raised position of the compartment system, by lying directly against the stop. Optionally, the lock is adapted to selectively lock the guide assembly in both the lower and upper positions.

In a further aspect, the invention relates to the use of the above-described storage device, comprising loading general cargo into and/or unloading general cargo from one or more of the storage compartments. The same features and advantages can therefore be reiterated in this regard.

In what follows, the invention is described by way of non-limiting examples and figures illustrating the invention, and which are not intended to and should not be interpreted as limiting the scope of the invention.

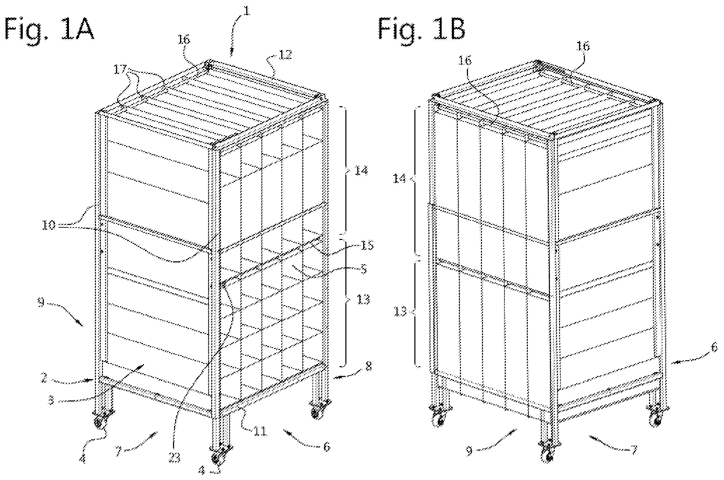

Figures 1A**-B** are perspective drawings of a storage rack **1,** according to a possible embodiment. The storage rack **1** comprises a frame **2** and a compartment system **3** which is suspended within the frame **2.** The frame **2** comprises four upright corner posts **10,** between a rectangular lower frame **11** at the bottom and a rectangular upper frame **12** at the top. At the bottom, the lower frame **11** is further provided with wheels **4** for movability. The compartment system **3** itself forms a plurality of compartments **5,** suitable for storing general cargo (not shown). The compartments **5** are only accessible from the front **6.** See Fig. 1A. The compartments **5** are closed, or in any case inaccessible, along the left side **7,** the right side **8** and the rear side **9.** Optionally, they are closed dust-tight along those sides **7, 8, 9.**

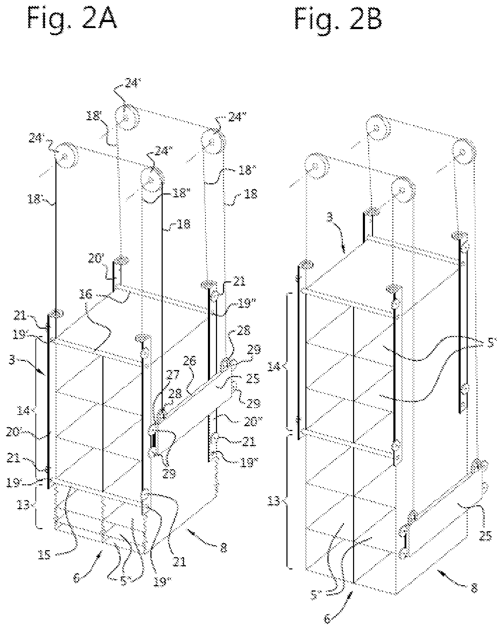

The compartment system **3** comprises at least a lower level **13** and an overlying level **14** of storage compartments **5.** Preferably, the storage compartments **5** of both the lower level **13** and the overlying level **14** are flexible. The lower level **13** is suspended from lower cross bars **15;** the upper level **14** is suspended from upper cross bars **16.** There are two lower and two upper cross bars **15, 16:** always one at the front **6** and one at the rear **9** of the storage rack **1.** The cross bars **15, 16** extend horizontally between the left and right sides **7, 8** of the storage rack **1.** They extend through eyes **17** formed by the compartment material of the storage compartments **5.** These eyes are optionally equipped with reinforcement rings. The compartment system **3** is vertically movable in the frame **2,** between a lowered position and a raised position. Figs. 1A-B only show the raised position of the compartment system **3.** The cross bars **15, 16** at the front **6** have the advantage that they can be easily gripped by the user for manual movement of the compartment system **3.** The vertical movement of the compartment system **3** is further illustrated with reference to Figs. 2A-C.

Figures 2A**-C** schematically illustrate the raising and lowering of a compartment system **3,** according to a possible embodiment. The lower level **13** of storage compartments **5'** is suspended under lower cross bars **15** at the front and rear. The upper level **14** of storage compartments **5"** is suspended under upper cross bars **16** at the front and rear. The cross bars **15, 16** each form left and right end parts **19', 19"** coupled together with corresponding left and right guide assemblies **20', 20".** The upper and lower cross bars **15, 16** are thus coupled to the same guide assemblies **20', 20",** respectively at the front and rear; optionally, the upper level **14** of storage compartments **5"** is held taut between them, between the lower and upper cross bars **15, 16.** Each guide assembly **20** extends over at least the vertical extent of this upper level **14.** In contrast to the lower level **13,** the upper level **14** thus always remains erected.

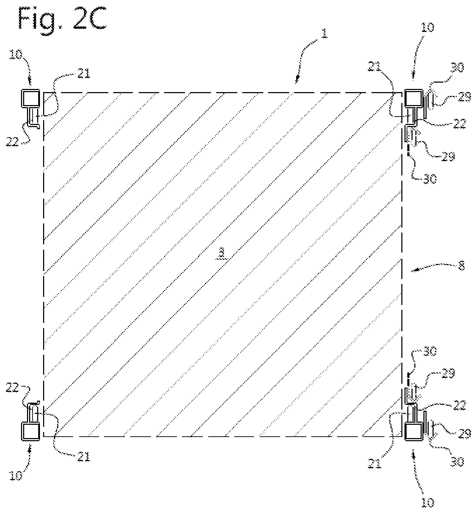

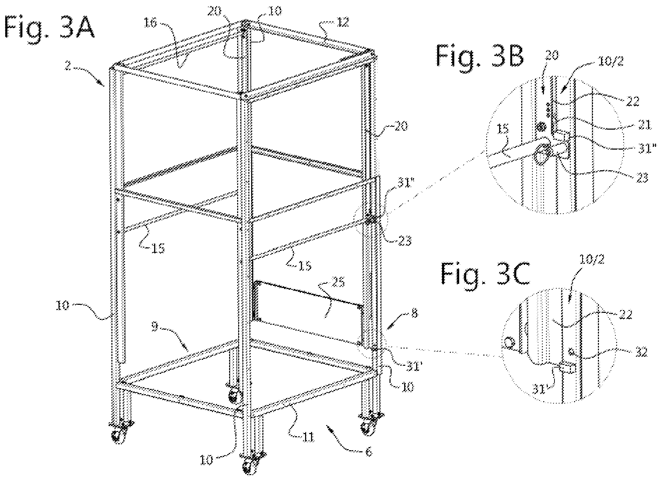

The guide assemblies **20** are vertically movable along the corner posts **10** of the frame **2** (not shown in Figs. 2A-B), with one guide assembly **20** per corner post **10.** To this end, each guide assembly **20** is provided at the bottom and top with a rolling element **21,** for guiding along a guideway **22** formed by the frame **2.** Optionally, the frame **2** comprises four profiled corner posts **10,** the transverse profile of which forms a guideway **22** for guiding such rolling elements **21.** See e.g. the horizontal section of Fig. 2C. Optionally, at least one of the guide assemblies **20** is further equipped with a transverse lock **23** - e.g. a plunger lock (not shown in Fig. 2A-C, see e.g. Fig. 1A and Figs. 3A-C.

Fig. 2A shows the lowered position of the compartment system **3.** The lower level **13** of storage compartments **5'** has collapsed flexibly. The upper level **14** of storage compartments **5"** is erected above it. These compartments **5** are accessible from the front **6.** The compartment system **3** is rectangularly suspended from four lifting belts **18** which extend vertically upwards. They extend from the guide assemblies **20** along the corner posts **10** (not shown in Figs. 2A-B). At the top, the frame **2** (not shown in Figs. 2A-B) provides belt guides **24,** which the lifting belts **18** bend around laterally. The left-hand lifting belts **18'** run laterally as far as the right-hand belt guides **24".** There, the left and right lifting belts **18', 18"** are combined, and combined and deflected downwards. Downward ends of the (combined) lifting belts **18** are coupled to a countermass **25.** In particular, they are coupled to an upper edge **26** of the countermass **25,** near two upper corners **27** of the countermass **25.**

With this design, the lifting belts **18', 18"** are bent downwards, at the top of the frame **2** (not shown in Figs. 2A-B). An upward or downward movement of the compartment system **3** is therefore accompanied by a reciprocal downward or upward movement of the countermass **25.** Fig. 2A shows the countermass **25** in its raised position. The main function of the belt guides **24** at the top of the frame **2** is to deflect the lifting belts **18** wrapped around it. They do not have the function of winding the lifting belts **18** around them; they are not a winch (as provided for with CZ 29 088 and SK 7781 from Keypack). The belt guides **24** can be of relatively small design. They preferably do not, or only barely, limit the usable height of the storage rack **1.**

The countermass **25** is substantially rectangular and plate-shaped, adapted to move vertically upwards and downwards along the right-hand side **8** of the storage rack **1.** The countermass **25** therefore does not hinder access to the storage compartments **5,** along the front side **6.** Furthermore, the countermass **25 is** adapted to move parallel to the right-hand side **8** with its plate shape. Thus, the countermass **25** does not, or only barely, limit the usable width of the storage rack **1.** Furthermore, the countermass **25** is provided with coupling points **28** near the upper corners **27,** for coupling to the lifting belts **18.** The countermass **25** is also equipped with rolling elements **29,** coupled with further guideways **30** to the frame **2** (not drawn in Figs. 2A-B, see the horizontal section of Fig. 2C). Optionally, the guideways **30** are provided laterally, relative to the corner posts **10** (solid line). Alternatively, the guideways **30** are enclosed between the corner posts **10** (dotted line), the countermass **25** extending between the corner posts **10** - with the advantage that they do not protrude relative to the frame **2.** With a rectangular configuration of two rolling elements **29** at the top and bottom, enclosed on either side between guideways **30,** the countermass **25** is restrained to at most a vertical upward or downward movement. In particular, the counterweight **25 is** unable to 'skew' between the guideways **30.**

Fig. 2B further shows the raised position of the compartment system **3.** The lower level **13** of storage compartments **5'** is erected and accessible from the front **6.** The upper level **14** of storage compartments **5"** has been erected above it. The upward movement of the compartment system **3** is accompanied by a reciprocal downward movement of the countermass **25** along the right-hand side **8.**

Finally, figures 3A**-C** illustrate a transverse lock **23,** for selectively locking and unlocking the movement of the compartment system **3.** For clarity, the storage compartments **5** have not been drawn. Optionally, the embodiment corresponds to Figs. 1A-B.

Fig. 3A shows a frame **2** with four corner posts **10,** a lower frame **11** and an upper frame **12.** A movable guide assembly **20** is provided along each corner post **10.** Each corner post **10** further forms a guideway **22.** See also the detailed views of Figs. 3B-C. The guideways **22** provide a vertical guidance of the guide assemblies **20** along the corner posts **10.** Preferably, each guide assembly **20** is provided for this purpose with rolling elements **21** at the bottom and the top. Along the front side **6** and rear side **9,** a lower and an upper cross bar **15, 16** are further provided, between the guide assemblies **20** on the left and right. The cross bars **15, 16** serve as suspension for the storage compartments **5.** For example, they are encased in loops and/or eyes formed by the compartment material (not shown in Figs. 3A-C).

Along the right side **8** the frame **2** is further equipped with a countermass **25.** The countermass **25** is vertically movable along and between the right corner posts **10.** Preferably, the countermass **25** is adapted to move reciprocally with the compartment system **3.**

Along the front **6,** the right-hand guide assembly **20** is further equipped with a transverse lock **23.** Optionally, it is a manually operable plunger lock, accessible from the front **6.** Preferably, the lock **23** is suitable for engaging transversely on the frame **2,** for instance in a locking hole **32** provided on the frame **2.** See Fig. 3C. With further preference, the lock **23** can be selectively disengaged and engaged. The movement of the guide assembly **20** is then correspondingly unlocked and locked.

The frame **2** further provides a lower stop **31'** and an upper stop **31".** Preferably, the stops **31', 31"** are provided such that they limit the movement of the guide assembly **20,** between an upper position and a lower position. The lower position corresponds to the lowered position of the compartment system **3.** The upper position corresponds to the raised position of the compartment system **3.** Preferably, the guide assembly **20** abuts directly against the corresponding stop **31', 31"** in these positions. The stop **31** thus provides a support and already prevents the (spontaneous) movement of the compartment system 3 in one direction. The transverse lock **23** is preferably designed in such a way that it is able to lock the guide assembly **20** in question (and thus the compartment system **3)** in both the lower position and the upper position.

The numbered elements in the figures are as follows:
- 1: Storage rack
- 2: Frame
- 3: Compartment system
- 4: Wheel
- 5: Compartment
- 6: Front
- 7: Left side
- 8: Right side
- 9: Back
- 10: Corner post
- 11: Lower frame
- 12: Upper frame
- 13: Bottom level
- 14: Overlying/upper level
- 15: Lower cross bar
- 16: Overlying / upper cross bar
- 17: Eye
- 18: Lifting belt
- 19: End part (cross bar)
- 20: Guide assembly
- 21: Rolling element (compartment system)
- 22: Guideway (for compartment system)
- 23: Transverse lock
- 24: Belt guide
- 25: Countermass
- 26: Top edge (countermass)
- 27: Upper corner (countermass)
- 28: Coupling points
- 29: Rolling element (countermass)
- 30: Guideway (for countermass)
- 31: Stop
- 32: Locking hole

## Claims

1. A storage device (1) comprising a frame (2) and a compartment system (3) suspended within the frame (2), which compartment system (3) comprises at least a lower level (13) of storage compartments (5') and an upper level (14) of storage compartments (5"), accessible from a front (6) of the device (1), and suitable for the storage of general cargo, the device (1) being further adapted for vertical movability of the compartment system (3) between a lowered position and a raised position, within the frame (2),
- in which lowered position the lower level (13) has collapsed, with the upper level (14) erected and accessible above it, and
- in which raised position the lower level (13) is erected and accessible, with the overlying level above it (14) raised,
wherein the compartment system (3) is rectangularly suspended from four lifting belts (18', 18") extending vertically upwards, wherein the compartment system (3) at the front (6) provides a lower cross bar (15) and an upper cross bar (16), movable vertically in the frame (2), from which cross bars (15, 16) respectively the lower and the upper level (13, 14) is suspended, wherein each level provides a grid of storage compartments which are provided next to and above each other, and wherein at least the lower level of storage compartments is made of a flexible material,
**characterised in that** the storage device (1) further comprises a countermass (25) adapted to move reciprocally with the compartment system (3), between a raised position and a lowered position, wherein the countermass (25) is substantially plate-shaped, adapted to move parallelly along the storage device (1).

2. Storage device (1) according to claim 1, wherein the countermass (25) is adapted to move along a side (8) of the storage device (1), different from the front side (6).

3. Storage device (1) according to claim 1 or 2, wherein the countermass (25) is substantially rectangular and plate-shaped.

4. Storage device (1) according to any of the preceding claims 1-3, wherein the lifting belts (18', 18") bend laterally at the top of the frame (2) and are coupled vertically downwards to the countermass (25).

5. Storage device (1) according to claim 4, wherein the lifting belts (18', 18") combine in pairs at the top of the frame (2), and wherein each pair of lifting belts (18) is combined and coupled downwards with the countermass (25).

6. Storage device (1) according to claim 5, wherein the countermass (25) comprises an upper edge part (26), to which upper edge part (26) said pairs of lifting belts (18) are coupled, each near a respective upper corner (27) of the countermass (25).

7. Storage device (1) according to any of the preceding claims 1-6, wherein the countermass (25) is provided with guide means (29), adapted to guide the countermass (25) rectangularly between two guideways (30) provided on the frame (2).

8. Storage device (1) according to any of the preceding claims 1-7, wherein left end parts (19') and right end parts (19") of said cross bars (15, 16) are coupled to a left and a right guide assembly (20', 20") respectively, which guide assemblies (20', 20") are vertically movable along the frame (2).

9. Storage device (1) according to claim 8, of which at least one guide assembly (20) is provided with a transverse lock (23) for selectively locking the vertical movement of the guide assembly (20).

10. Storage device (1) according to any of the claims 8-9, wherein the frame (2) provides a lower stop (31') and an upper stop (31") limiting the movement of at least one guide assembly (20), between a lower and an upper position.

11. Storage device (1) according to any of the claims 9-10, wherein the lock (23) is adapted to selectively lock the guide assembly (20) in both the lower and the upper position.

12. A use of a storage device (1) according to any of the preceding claims 1-11, comprising loading general cargo into and/or unloading general cargo from one or more of the storage compartments (5', 5").

## Patentansprüche

1. Lagervorrichtung (1), umfassend einen Rahmen (2) und ein innerhalb des Rahmens (2) aufgehängtes Fachsystem (3), wobei das Fachsystem (3) mindestens eine untere Ebene (13) von Lagerfächern (5') und eine obere Ebene (14) von Lagerfächern (5") umfasst, die von einer Vorderseite (6) der Vorrichtung (1) zugänglich sind und zum Lagern von Stückgut geeignet sind, wobei die Vorrichtung (1) weiter für vertikale Beweglichkeit des Fachsystems (3) innerhalb des Rahmens (2) zwischen einer abgesenkten und einer angehobenen Position angepasst ist,
- wobei in der abgesenkten Position die untere Ebene (13) eingeklappt ist, während die obere Ebene (14) aufgerichtet ist und über diese zugänglich ist, und
- wobei in der angehobenen Position die untere Ebene (13) aufgerichtet und zugänglich ist, wobei die darüber liegende Ebene (14) angehoben ist,
wobei das Fachsystem (3) rechteckig an vier sich vertikal nach oben erstreckenden Hebegurten (18', 18") aufgehängt ist, wobei das Fachsystem (3) an der Vorderseite (6) eine untere Querstange (15) und eine obere Querstange (16) bereitstellt, die im Rahmen (2) vertikal bewegbar sind, und wobei an den Querstangen (15, 16) jeweils die untere und die obere Ebene (13, 14) aufgehängt ist, wobei jede Ebene ein Raster von Lagerfächern bereitstellt, die nebeneinander und übereinander bereitgestellt sind, und wobei mindestens die untere Ebene von Lagerfächern aus einem flexiblen Material hergestellt ist,
**dadurch gekennzeichnet, dass** die Lagervorrichtung (1) weiter eine Gegenmasse (25) umfasst, die so angepasst ist, dass sie sich mit dem Fachsystem (3) zwischen einer angehobenen und einer abgesenkten Position hin und her bewegt, wobei die Gegenmasse (25) im Wesentlichen plattenförmig ist und so angepasst ist, dass sie sich parallel entlang der Lagervorrichtung (1) bewegt.

2. Lagervorrichtung (1) nach Anspruch 1, wobei die Gegenmasse (25) so angepasst ist, dass sie sich entlang einer Seite (8) der Lagervorrichtung (1) bewegt, die von der Vorderseite (6) unterschiedlich ist.

3. Lagervorrichtung (1) nach Anspruch 1 oder 2, wobei die Gegenmasse (25) im Wesentlichen rechteckig und plattenförmig ist.

4. Lagervorrichtung (1) nach einem der vorstehenden Ansprüche 1-3, wobei sich die Hebegurte (18', 18") an der Oberseite des Rahmens (2) seitlich biegen und vertikal nach unten mit der Gegenmasse (25) gekoppelt sind.

5. Lagervorrichtung (1) nach Anspruch 4, wobei die Hebegurte (18', 18") an der Oberseite des Rahmens (2) paarweise kombiniert sind, und wobei jedes Paar von Hebegurten (18) mit der Gegenmasse (25) nach unten kombiniert und gekoppelt ist.

6. Lagervorrichtung (1) nach Anspruch 5, wobei die Gegenmasse (25) einen oberen Randabschnitt (26) umfasst, wobei die Paare von Hebegurten (18) jeweils in der Nähe einer oberen Ecke (27) der Gegenmasse (25) mit dem oberen Randabschnitt (26) gekoppelt sind.

7. Lagervorrichtung (1) nach einem der vorstehenden Ansprüche 1-6, wobei die Gegenmasse (25) mit Führungsmitteln (29) bereitgestellt ist, die so angepasst sind, dass sie die Gegenmasse (25) rechteckig zwischen zwei auf dem Rahmen (2) bereitgestellten Führungsbahnen (30) führen.

8. Lagervorrichtung (1) nach einem der vorstehenden Ansprüche 1-7, wobei linke Endteile (19') und rechte Endteile (19") der Querstangen (15, 16) jeweils mit einer linken bzw. rechten Führungsanordnung (20', 20") gekoppelt sind, wobei die Führungsanordnungen (20', 20") entlang des Rahmens (2) vertikal bewegbar sind.

9. Lagervorrichtung (1) nach Anspruch 8, wobei mindestens eine Führungsanordnung (20) zum selektiven Verriegeln der vertikalen Bewegung der Führungsanordnung (20) mit einer Querverriegelung (23) bereitgestellt ist.

10. Lagervorrichtung (1) nach einem der Ansprüche 8-9, wobei der Rahmen (2) einen unteren Anschlag (31') und einen oberen Anschlag (31") bereitstellt, die die Bewegung von mindestens einer Führungsanordnung (20) zwischen einer unteren und einer oberen Position begrenzen.

11. Lagervorrichtung (1) nach einem der Ansprüche 9-10, wobei die Verriegelung (23) so angepasst ist, dass sie die Führungsanordnung (20) wahlweise sowohl in der unteren als auch in der oberen Position verriegelt.

12. Verwenden einer Lagervorrichtung (1) nach einem der vorstehenden Ansprüche 1-11, umfassend Laden von Stückgut in und/oder Entladen von Stückgut aus einem oder mehreren der Lagerfächer (5', 5").

## Revendications

1. Dispositif de stockage (1) comprenant un châssis (2) et un système de compartiments (3) suspendu à l'intérieur du châssis (2), lequel système de compartiments (3) comprend au moins un niveau inférieur (13) de compartiments de stockage (5') et un niveau supérieur (14) de compartiments de stockage (5"), accessibles depuis un côté avant (6) du dispositif (1), et adaptés au stockage de marchandises diverses, le dispositif (1) étant en outre conçu pour permettre une mobilité verticale du système de compartiments (3) entre une position abaissée et une position relevée, à l'intérieur du châssis (2),
- position abaissée dans laquelle le niveau inférieur (13) est aplati, avec le niveau supérieur (14) dressé et accessible au-dessus de celui-ci, et
- position relevée dans laquelle le niveau inférieur (13) est dressé et accessible, avec le niveau sus-jacent au-dessus de celui-ci (14) relevé,
dans lequel le système de compartiments (3) est suspendu de manière rectangulaire à quatre sangles de levage (18', 18") s'étendant verticalement vers le haut, dans lequel le système de compartiments (3) fournit, à l'avant (6), une traverse inférieure (15) et une traverse supérieure (16), mobiles verticalement dans le châssis (2), traverses (15, 16) auxquelles les niveaux inférieur et supérieur (13, 14) sont respectivement suspendus, dans lequel chaque niveau fournit une grille de compartiments de stockage disposés les uns à côté des autres et les uns au-dessus des autres, et dans lequel au moins le niveau inférieur de compartiments de stockage est constitué d'un matériau souple,
**caractérisé en ce que** le dispositif de stockage (1) comprend en outre une contre-masse (25) conçue pour effectuer un mouvement de va-et-vient avec le système de compartiments (3), entre une position relevée et une position abaissée, dans lequel la contre-masse (25) est sensiblement en forme de plaque, conçue pour se déplacer parallèlement le long du dispositif de stockage (1).

2. Dispositif de stockage (1) selon la revendication 1, dans lequel la contre-masse (25) est conçue pour se déplacer le long d'un côté (8) du dispositif de stockage (1), autre que le côté avant (6).

3. Dispositif de stockage (1) selon la revendication 1 ou 2, dans lequel la contre-masse (25) est sensiblement rectangulaire et en forme de plaque.

4. Dispositif de stockage (1) selon l'une quelconque des revendications 1 à 3 précédentes, dans lequel les sangles de levage (18', 18") s'incurvent latéralement au sommet du châssis (2) et sont accouplées verticalement vers le bas à la contre-masse (25).

5. Dispositif de stockage (1) selon la revendication 4, dans lequel les sangles de levage (18', 18") se combinent par paires au sommet du châssis (2), et dans lequel chaque paire de sangles de levage (18) est combinée et accouplée vers le bas à la contre-masse (25).

6. Dispositif de stockage (1) selon la revendication 5, dans lequel la contre-masse (25) comprend une partie de bord supérieur (26), partie de bord supérieur à laquelle lesdites paires de sangles de levage (18) sont accouplées, chacune à proximité d'un coin supérieur respectif (27) de la contre-masse (25).

7. Dispositif de stockage (1) selon l'une quelconque des revendications 1 à 6 précédentes, dans lequel la contre-masse (25) est pourvue de moyens de guidage (29), conçus pour guider la contre-masse (25) de manière rectangulaire entre deux glissières (30) prévues sur le châssis (2).

8. Dispositif de stockage (1) selon l'une quelconque des revendications 1 à 7 précédentes, dans lequel des parties d'extrémité gauche (19') et des parties d'extrémité droite (19") desdites traverses (15, 16) sont accouplées respectivement à un ensemble de guidage gauche et à un ensemble de guidage droit (20', 20"), lesquels ensembles de guidage (20', 20") sont mobiles verticalement le long du châssis (2).

9. Dispositif de stockage (1) selon la revendication 8, dont au moins un ensemble de guidage (20) est muni d'un dispositif de verrouillage transversal (23) permettant de bloquer sélectivement le mouvement vertical de l'ensemble de guidage (20).

10. Dispositif de stockage (1) selon l'une quelconque des revendications 8 à 9, dans lequel le châssis (2) comporte une butée inférieure (31') et une butée supérieure (31") limitant le mouvement d'au moins un ensemble de guidage (20) entre une position inférieure et une position supérieure.

11. Dispositif de stockage (1) selon l'une quelconque des revendications 9 à 10, dans lequel le dispositif de verrouillage (23) est conçu pour verrouiller sélectivement l'ensemble de guidage (20) aussi bien dans la position inférieure que dans la position supérieure.

12. Utilisation d'un dispositif de stockage (1) selon l'une quelconque des revendications 1 à 11 précédentes, comprenant le chargement et/ou le déchargement de marchandises diverses dans et/ou depuis un ou plusieurs des compartiments de stockage (5', 5").
